Europäisches Patentamt

European Patent Office

Office européen des brevets

(19)

(11) Publication number:

**0 246 890**
**A1**

## (12) EUROPEAN PATENT APPLICATION

(21) Application number: **87304507.4**

(22) Date of filing: **21.05.87**

(51) Int. Cl.³: **F 16 L 9/19**
**B 29 C 47/02**

(30) Priority: **21.05.86 GB 8612330**

(43) Date of publication of application:
**25.11.87 Bulletin 87/48**

(84) Designated Contracting States:
**AT BE CH DE ES FR GB GR IT LI LU NL SE**

(71) Applicant: **Reeves, Robert Ernest**
**Cottage O'er The Gate The Hills**
**Bradwell Sheffield West Yorkshire(GB)**

(72) Inventor: **Reeves, Robert Ernest**
**Cottage O'er The Gate The Hills**
**Bradwell Sheffield West Yorkshire(GB)**

(74) Representative: **Whalley, Kevin et al,**
**Wilson Gunn Ellis & Co. 41-51 Royal Exchange Cross**
**Street**
**Manchester M2 7BD(GB)**

(54) **Conduit assembly.**

(57) A method of and apparatus are described for forming a protective coating (28) around a conduit assembly (10) which has a core including a plurality of flexible conduits (11) surrounded by a resilient sheath (12) of insulating material. The coating (28) is formed by passing the assembly (10) through an applicator (13) which applies to the assembly (10) a cooling of a hot, settable substance which cools to form a resilient, flexible outer protective coating (28) for the assembly (10).

EP 0 246 890 A1

./...

( EP16218 )
( 18.5.87 )

0246890

## CONDUIT ASSEMBLY

This invention relates to a conduit assembly comprising a plurality of conduits forming a core, and an insulating sheath surrounding the core.

In a known assembly of this type the sheath is of foamed plastics or rubber material united with the core either by being split and re-united around the core, or by being formed continuously around the core, or by a continuous strip of foam being helically wound around the core. In all cases, the outer surface of the sheath needs protection to prevent damage during storage, handling and installation of the assembly. A known method of providing protection involves helical wrapping with adhesive tape. However, this is expensive and leaves slight ridges on the outer surface which can catch on sharp edges during installation, hindering installation and sometimes causing the covering to be rolled or torn off.

It is an object of the present invention to provide a method of and apparatus for providing a cover layer for a conduit assembly wherein the above disadvantages are obviated or minimised.

Accordingly, the invention provides a method, of protecting a conduit assembly comprising a core having a plurality of conduits and a surrounding insulating sheath, including the steps of passing the assembly through an applicator supplied with a hot, settable substance to form a layer of the substance on the outer surface of the assembly and allowing the layer to cool to form an enveloping surface cover on the assembly.

The applicator can include a plurality of brush-like or mouth-like heads arranged in overlapping relationship around a path of travel of the assembly.

Alternatively the applicator can include an annular die whose size is selected to allow the assembly to be a sliding fit therein, the die having an annular inwardly directed orifice supplied, in use, with hot melt adhesive under pressure to coat the assembly.

The die can be circular, polygonal or of other shape to suit the cross-sectional shape of the assembly.

If assembly cross-sectional size is variable due to manufacturing tolerances, the die is sized to suit the smallest permissible assembly cross-section, portions of the assembly of larger size undergoing compression on passage through the die.

The amount of substance supplied should be sufficient to enable expansion of such bigger portions after passage through the die to take place, whilst the substance remains molten, without deleterious thinning or splitting of the covering layer.

The hot substance can be simply a plastics or like polymer, thermoplastic or thermosetting, in a fluid condition, or can be a hot melt adhesive.

Preferably there is formed a chemical and/or physical surface-to-surface bond between the material of the covering layer and the substance of the sheath after cooling. However, this is not essential and the covering layer can be effectively a separate enveloping tube after cooling, provided that it is intrinsically strong enough to exist and take wear without the assistance of a bond with the sheath.

In the case where the sheath includes one or more joints between facing surfaces of a sheath-forming body or bodies, the applicator can be incorporated in a production line at or closely after a station at which such joints are formed, adhesive from the applicator supply being directed to such joint or joints to unite them.

The invention also provides apparatus, for protecting a conduit assembly comprising a core having a plurality of conduits and a surrounding insulating sheath, including a supply of hot, settable substance, an applicator for forming layer of the substance on an outer surface of the assembly, and means for progressing the assembly through the applicator to form the layer progressively along the assembly.

The applicator can include an overlapping plurality of applicator heads arranged in a ring around the assembly, or a die dimensioned to surround the assembly and having an annular orifice, connected to the supply.

The die can be an interchangeable component, a plurality of such dies being provided, each of which has an outer part dimensioned to fit a body of the applicator. Individual ones of the dies can have different internal sizes to suit a particular size of assembly.

The applicator can include a heater to maintain it and its parts at a temperature above the melting point of the substance. A lead-in part of the applicator can be arranged and/or constructed to effect some heating of the sheath surface before the substance is applied thereto to discourage chilling of the substance on application. The substance can be a molten thermoplastics or thermosetting material or can be a hot melt adhesive.

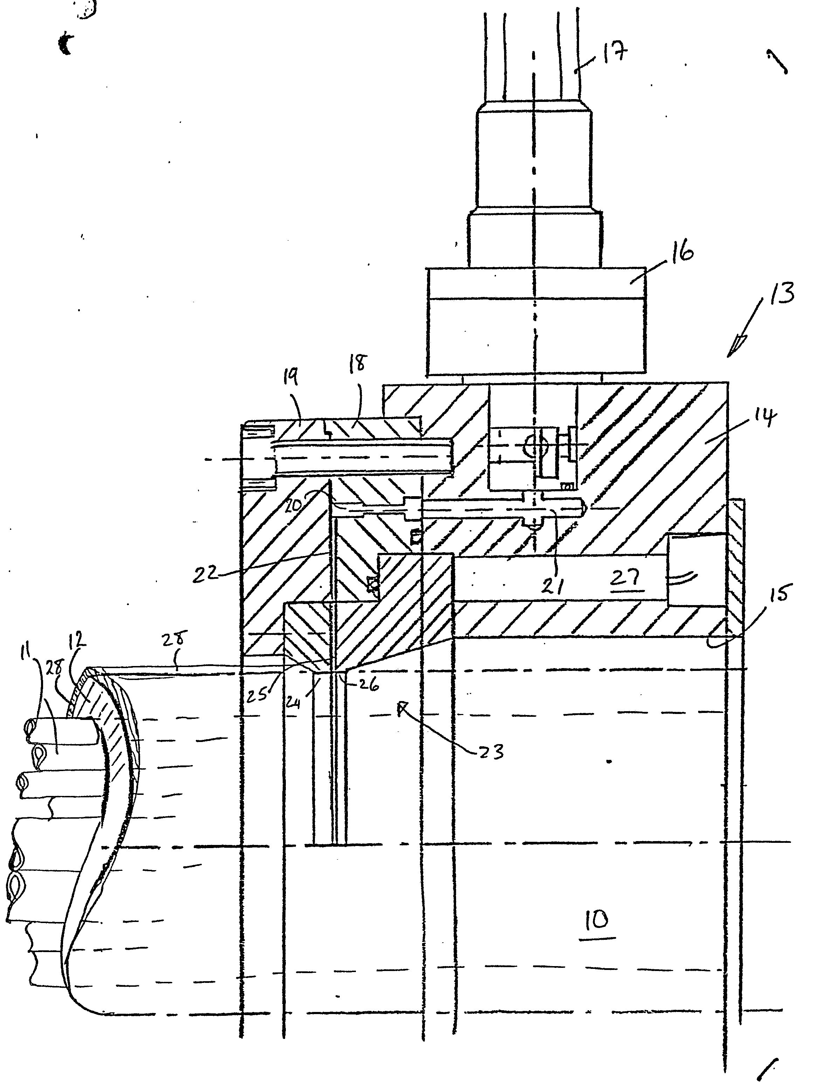

The invention will be described further, by way of example, with reference to the accompanying drawings, wherein the single figure is a longitudinal cross sectional view through a preferred apparatus of the invention.

The figure shows the essential parts only of the apparatus. Other parts, such as a supply reel for the assembly, a take-up reel and/or rollers for drawing the assembly through the apparatus, and a cooler (if needed) downstream of the applicator, are not shown as they will usually be of conventional construction. Likewise a feed for the molten adhesive has not been shown.

The assembly 10 to be treated comprises a core composed of a plurality of individual conduits 11 laid in a parallel bundle and united loosely by wrapping or the like. The core is surrounded by a hollow cylindrical sheath 12 of foamed plastics material, or of some other insulant. The assembly can be used in the drinks industry to carry beverages from a cellar to one or more bars or the like in different rooms of a hotel or public house.

After being formed, the assembly 10 is fed to pass through an applicator 13 which has a body 14 which includes a central through-passage 15, and a lateral connection 16 on one side for a heated and/or insulated pipe 17 which supplies a molten hot melt adhesive under pressure from a source (not illustrated). To the body 14 are secured a manifold ring 18 and a cap ring 19. The former defines an annular manifold 20 connected to a flow passage 21 from the connection 16 and leading to an annular, radially inward flow channel 22. Rings 18, 19 secure to the body 14 one of a plurality of annular dies 23. Die 23 has a circular

( EP16218 )
( 18.5.87 )

central mouth 26 providing a short cylindrical section 24 of minimum diameter having a cylindrically tapered part on each side thereof. An interrupted annular radial feed slot 25 leads to the annular mouth 26 and lies in register with channel 22. Die 22 can be removed and replaced with one of several comparable dies, not shown, having mouths 26 of lesser diameter to accommodate smaller assemblies. An annular heater 27 keeps the temperature of the applicator 13 above a predetermined value.

In use  the assembly 10 is fed from right to left and its outer surface contacts or comes close to the periphery of mouth 26. Hot melt adhesive issues from orifice 25 and forms an enveloping layer 28 around the assembly. On exit from the die the layer 28 cools, or is cooled by a stream of cooling fluid, to form a smooth-surfaced protective envelope around the assembly. The envelope is continuous and exhibits no joints and is flexible compared to a wrapping of tape.

The hot melt adhesive can be simply a molten thermoplastic or thermosetting material which forms little or no bond with the sheath material, provided that the enveloping layer is sufficiently thick or strong to function without support from the sheath. Preferably, however, the adhesive forms a chemical and/or mechanical adhesive bond with the sheath material.

As a variation, in the case where the sheath is composed of one or more pieces of insulating materail
with a joint or joints, the applicator can be at or
immediately after a station at which the sheath is
formed or re-formed and the joint(s) made. The joint(s)
can be sealed by applying hot melt adhesive thereto via
a pipe from the adhesive supply of the applicator,
eliminating the need for a  separate supply of adhesive.
Alternatively, the joint(s) could be made as the assembly
approaches the die and it be arranged that adhesive
from the die enters the joint(s) to form a union and
unions therebetween.

The apparatus and method described above are
particularly suitable for use with a hot melt adhesive
When a thermosetting or thermoplastics material is
used, a conventional plastics extruder can replace
the applicator head.

(EP16218)
(18.5.87)

-8-

## CLAIMS

1.      A method of protecting a conduit assembly comprising a core having a plurality of conduits and a surrounding insulating sheath, characterised in that the conduit assembly (10) is passed through an applicator (13) supplied with a hot, settable substance to form a layer (28) of the substance on the outer surface of the assembly (10) and allowing the layer (28) to cool to form an enveloping surface cover on the assembly (10).

2.      A method as claimed in claim 1, characterised in that the applicator (13) includes a plurality of brush-like heads arranged in overlapping relationship around a path of travel of the assembly.

3.      A method as claimed in claim 1, characterised in that the applicator includes a plurality of mouth-like heads arranged in overlapping relationship around a path of travel of the assembly.

4.      A method as claimed in claim 1, characterised in that the applicator includes an annular die 23 whose size is selected to allow the assembly (10) to be a sliding fit therein, the die 23 having an annular inwardly directed orifice 22 supplied, in use, with hot melt adhesive under pressure to coat the assembly.

5.      A method as claimed in claim 4, characterised in that the die (27) is circular, polygonal or of other shape to suit the cross-sectional shape of the assembly (10).

6. A method as claimed in any preceding claim, characterised in that the cross-sectional area size of the assembly varies due to manufacturing tolerances, and the die (23) is sized to suit the smallest permissible assembly (10) cross-section, portions of the assembly (10) of larger size undergoing resilient compression on passage through the die (23).

7. A method as claimed in claim 6, characterised in that the amount of substance supplied is sufficient to enable expansion of such bigger portions, after passage through the die (23) to take place, whilst the substance remains molten, without deleterious thinning or splitting of the covering layer (28).

8. A method as claimed in any preceding claim characterised in that the hot substance is a plastics or like polymer, thermoplastic or thermosetting, in a fluid condition.

9. A method as claimed in any of claims 1 to 7 characterised in that the substance is a hot-melt adhesive.

10. A method as claimed in claim 8 or 9 characterised in that the substance and the insulating layer are chosen so that there is formed a chemical and/or physical surface-to-surface bond between the substance of the covering layer and the material of the sheath.

11. A method as claimed in claim 8, characterised in that the covering layer is effectively a separate enveloping tube after cooling and is intrinsically strong enough to exist and take wear without the assistance of a bond with the sheath.

12.       A method as claimed in any of claims 1 to 11 characterised in that the sheath includes one or more joints between facing surfaces of a sheath-forming body or bodies and the applicator is incorporated in a production line at or closely after a station at which such joints are formed, hot substance from the applicator supply being directed to such joint or joints to unite them.

13.       Apparatus for protecting a conduit assembly (10) comprising a core having a plurality of conduits (11) and a surrounding insulating sheath (12) including a supply of hot, settable substance, an applicator (13) for forming a layer (28) of the substance on an outer surface of the assembly, and means for progressing the assembly (10) through the applicator (13) to form the layer (28) progressively along the assembly (10).

14.       Apparatus as claimed in claim 13, characterised in that the applicator includes an overlapping plurality of applicator heads arranged in a ring around the assembly.

15.       Apparatus as claimed in claim 13, characterised in that the applicator (13) includes a die (23) dimensioned to surround the assembly (10) and having an orifice connected to the supply.

16.       Apparatus as claimed in claim 15, characterised in that the die (23) is an interchangeable component, a plurality of such dies being provided, each of which has an outer part dimensioned to fit a body of the applicator and individual ones of the dies having different internal sizes each to suit a particular size of assembly.

17.      Apparatus as claimed in any of claims 13 to 16
characterised in that the applicator includes a heater to
maintain it and its parts at a temperature above the melting
point of the substance.

18.      Apparatus as claimed in claim 15, 16 or 17 wherein
a lead-in part of the applicator (13) is arranged and/or
constructed to effect some heating of the sheath surface
before the substance is applied thereto to discourage
chilling of the substance on application.

19.      Apparatus as claimed in any of claims 13 to 18
wherein the substance is a molten thermoplastics or
thermosetting material or a hot melt adhesive.

0246890

## DOCUMENTS CONSIDERED TO BE RELEVANT

EP 87304507.4

| Category | Citation of document with indication, where appropriate, of relevant passages | Relevant to claim | CLASSIFICATION OF THE APPLICATION (Int. Cl.4) |
|---|---|---|---|
| A | DE - A - 2 228 976 (UKRAINSKIJ KOSCHI) <br> * Fig. * | 1-3,8, 13-19 | F 16 L 9/19 <br> B 29 C 47/02 |
| A | US - A - 4 097 564 (LAIR) <br> * Fig. 2; claim 7 * | 1,8, 13,14, 16,19 | |
| A | US - A - 3 905 853 (STENT) <br> * Totality * | 1,8, 13,14, 16,19 | |
| A | DD - A1 - 223 211 (VEB VERKEHRS- UND TIEFBAUKOMBINAT) <br> * Totality * | 1 | |
| A | US - A - 4 529 009 (HORNER) <br> * Totality * | 1 | |

| TECHNICAL FIELDS SEARCHED (Int. Cl.4) |
|---|
| F 16 L 9/00 |
| F 16 L 11/00 |
| F 16 L 39/00 |
| B 29 C 47/00 |
| B 29 D 23/00 |

The present search report has been drawn up for all claims

| Place of search | Date of completion of the search | Examiner |
|---|---|---|
| VIENNA | 29-07-1987 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document